## Europäisches Patentamt

## European Patent Office

## Office européen des brevets

(19)

(11) Publication number: **0 034 225**
**B1**

(12) # EUROPEAN PATENT SPECIFICATION

(45) Date of publication of patent specification: **28.12.83**

(51) Int. Cl.³: **B 29 H 7/22, F 16 G 5/06**

(21) Application number: **80300315.1**

(22) Date of filing: **04.02.80**

(54) **Process for manufacturing V-belts.**

(43) Date of publication of application:
**26.08.81 Bulletin 81/34**

(45) Publication of the grant of the patent:
**28.12.83 Bulletin 83/52**

(84) Designated Contracting States:
**BE CH DE FR GB IT NL SE**

(56) References cited:
**DE - B - 1 141 443**
**FR - A - 1 065 313**
**US - A - 3 800 610**
**US - A - 3 818 576**
**US - A - 3 839 116**
**US - A - 3 948 113**
**US - A - 4 019 399**
**US - A - 4 177 688**

(73) Proprietor: **The Gates Rubber Company**
**999 South Broadway P.O. Box 5887**
**Denver, Colorado 80217 (US)**

(72) Inventor: **Wrast, Richard E.**
**Route 3, Box 70 CC**
**Nixa, Missouri 65714 (US)**
Inventor: **Gardiner, William J.**
**13116 West Utah**
**Lakewood, Colorado 80228 (US)**
Inventor: **Shedd, Francis A.**
**6539 East Milan Place**
**Denver, Colorado 80237 (US)**

(74) Representative: **Carpmael, John William Maurice**
**et al,**
**CARPMAELS & RANSFORD 43 Bloomsbury**
**Square**
**London, WC1A 2RA (GB)**

Courier Press, Leamington Spa, England.

Process for manufacturing V-belts

This invention relates to a process for manufacturing coverless V-belts having non-molded, or "raw-edge" V-sides. More particularly, the invention relates to a process which provides for removing uncured elastomeric material from near the belt V-sides for reprocessing. The invention, of course, also extends to belts formed by the said process.

V-belts usually fall into two general categories. A covered V-belt is typically manufactured by fabricating a belt sleeve with a tensile member interpositioned between two elastomeric layers, forming V-sides in the belt by skiving away circumferential portions of one of the layers for reprocessing, annularly cutting the sleeve to form a plurality of V-belt bodies, surrounding the belt bodies with a fabric cover strip which may be impregnated with an elastomer, and curing and molding the belts in individual ring molds. Belts in this category are usually quiet running because of the fabric cover. The manufacturing process is economically desirable because the uncured skivings are reprocessible without deleterious affect on the elastomers effectiveness when finally cured.

Belts of the second category are started in a similar manner by fabricating a belt sleeve of principally two elastomeric layers that sandwich a tensile member. However, the entire sleeve is cured and annular bands are severed therefrom to form what is known as coverless or "raw edge" belts. When center cord line belts such as disclosed in U.S. Patent 3,869,933 are manufactured, there is no cured skiving scrap removed between adjacent belts of a sleeve. However, the center cord line belts may not have the power transmitting capability of a "high" cord line belt where the tensile member is placed in the upper portion of the V-belt body.

When high cord line, raw edge belts are manufactured the material removed between adjacent belts of a sleeve is not directly reprocessable because it has been cured. This is an economic disadvantage to the production of raw edge belts.

Material between adjacent belts of a belt sleeve may be removed by cutting as represented in the above patent, or the material may be removed by grinding as disclosed in U.S. Patent 3,822,516 or U.S. Patent 3,948,113. The raw edge belt shows some appearance advantage over a covered (banded) belt in prolonged use for some drive applications. In a raw edge belt, fibers or several piles of fabric are embedded in the elastomer layers so that portions can be exposed at the V-sides for quiet running. The material should be removed in a manner to expose the fibrous material such as by cutting or grinding. A belt having molded V-sides and no cover is unsatisfactory because a high coefficient or friction at the molded V-sides causes the belt to be aggressive by climbing out of a sheave or to be noisy. Also, the raw edge belt has a disadvantage in that it cannot be molded to some shapes such as the arching shapes of covered belts like disclosed in U.S. Patent 1,988,292.

In DE—B—1 141 443 a process is described in which V-belts are produced by pressing circumferential grooves in an uncured previously fabricated belt sleeve and then molding the so-formed sleeve against a mold matrix. The uncured elastomeric material of the belt sleeve in an outer second belt layer is substantially redistributed during the pressing process to a greater thickness. Such a pressing step requires that the second layer does not include fabric reinforcement because, in such a case, the second layer could not be significantly redistributed because it would be held in place by the fabric. The grooves so formed in the sleeve identify belt cross sections of the correct size for belts of the type that are interconnected with a tie band. That is, the molded V-sidewall portions for any given belt are not overspaced from each other (i.e. wider than required to make an oversized belt). Accordingly, in brief DE—B—1 141 443 discloses a process for making V-belts comprising the steps of fabricating an inverted belt sleeve from generally uncured elastomeric material with a tensile member interpositioned between an inner first layer and an outer second layer; forming a plurality of circumferential grooves in the sleeve; curing the belt sleeve; and severing the cured belt sleeve.

This invention is directed towards a manufacturing process which substantially reduces the amount of cured elastomer that must be removed when making high cord line belts, and instead removes uncured elastomer which can be reprocessed.

According to the present invention the belts and belt sleeve are produced by a process which involves fabricating an inverted belt sleeve from generally uncured elastomeric material with a tensile member interpositioned between an inner first layer and an outer second layer, curing the elastomeric material, removing cured elastomeric material and forming raw edge V-sidewall portions of V-belts, and circumferentially cutting the cured belt sleeve thus forming V-belts characterised in that circumferential strips of uncured elastomeric material are skived from the second layer at axial spacings of the sleeve, thus forming a plurality of circumferential grooves in the sleeve, whereupon the skived but uncured belt sleeve is located in a mold and is subjected to heat and pressure to mold and cure the skived belt sleeve while partially forming inverted V-belts with molded, over-spaced V-sidewall portions whereby the belts are circumferentially attached to one another by portions of the first layer adjacent the grooves; and subsequently removing part of the now cured molded V-sidewall portions so as to produce raw edge V-sidewalls; and then circumferentially severing the cured raw edge belt sleeve in the vicinity of at least some of the circumferential grooves thereby forming a plurality of finished V-belts having raw edge V-sidewalls.

A primary advantage of the invention is that raw edge V-belts are produced by a method which substantially reduces the amount of cured elastomeric material which has to be used and then must be removed to produce a finished V-belt.

Another advantage of the invention is that joined raw edge belts may be produced with substantially reduced cured material wastes.

Another advantage of the invention is that a raw edge belt having an arched undercord and reinforcement may be produced.

The invention is now described by way of example with reference to the accompanying drawings, in which:—

Figure 1 is a side view of a belt building mandrel and an uncured inverted belt sleeve with a portion broken away;

Figure 2 is an enlarged view similar to Figure 1 and showing the broken away portion and circumferential strips of uncured elastomeric material skived from the sleeve;

Figure 3 is an isometric view of a partial cavity, shell type mold showing the manner in which a belt sleeve is placed in or removed from the mold;

Figure 4 is a partial view taken along the lines 4—4 of Figure 3 and showing partial cavities of the shell type mold;

Figure 5 and 6 are views similar to Figure 4 showing examples of other partial mold cavities which may be used;

Figure 7 is a side view of a portion of a supporting drum, a broken away portion of a cured belt sleeve, and a broken view of a grinding wheel removing molded portions from the cured belt sleeve;

Figure 8 is a view of a drum, a broken away portion of a belt sleeve with portions of molded V-surfaces removed therefrom, and knives positioned to sever the sleeve to form individual V-belts;

Figure 9 is a cross section of a V-belt with fabric reinforcement layers embedded therein as made in accordance with the invention using the semi-cavity mold of Figure 4;

Figure 10 is a view similar to Figure 9 but showing a V-belt as cured using the semi-cavity mold of Figure 5;

Figure 11 is a view similar to Figure 10 but showing a V-belt having a fabric reinforcement embedded in an outer elastomeric layer and a fibrous reinforcement embedded in its inner elastomeric layer;

Figure 12 is a cross sectional view similar to that of Figure 9 but showing a V-belt produced using the mold of Figure 6, and also showing in dotted form the outline of molded portions of the V-sides; and

Figure 13 is a cross-sectional view of a belt produced in accordance with this invention and having three V-portions joined together at the belt top surface.

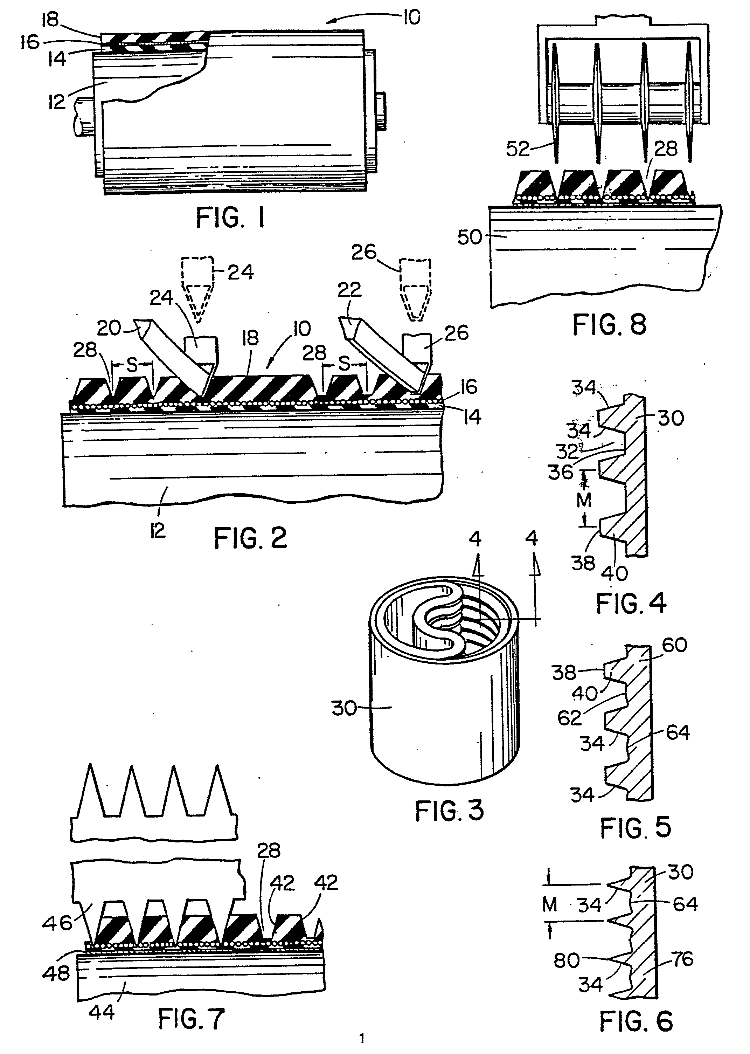

Referring to Figure 1, an inverted belt sleeve 10 is fabricated on a mandrel 12 in known fashion. An inner 14 or first layer of generally elastomeric material is positioned around the mandrel followed by the placement of a tensile member 16 such as a spirally wound cord. A second 18 or outer layer of generally uncured elastomeric material is then positioned around the tensile member. The inner and outer layers of uncured elastomeric material sandwich the tensile member. Examples of elastomeric material include the heat curable, natural and synthetic rubbers or blends thereof. The term "generally" is used in describing the elastomeric material as it may include embedded fibrous reinforcement such as discontinuous fibers or discrete layers of fabric as hereinafter illustrated.

Circumferential strips 20, 22 of uncured elastomeric material are skived from the second layer at axial spacings S of the sleeve. The strips are skived by plunging a contoured knife into a rotating sleeve. The knife contour is preferably chosen to complement the type of mold chosen. For example, a V-type knife 24 may be used to remove a strip of material which has triangular cross section 20. A truncated V-type knife 26 may be used to skive a strip having a trapezoidal cross section. The differently configured knives are chosen to correspond with the cavity spacings of the chosen mold. For example, the skived belt sleeve portion from the triangular knife may correspond to the mold configuration exemplified by Figure 6 while a skived portion of the belt sleeve from the truncated knife may correspond to the cavity spacings of the molds exemplified by Figures 4 and 5. As in the manufacture with many elastomeric or rubber-type products, care must be taken to control the amount of material skived from the sleeve because it will have an effect on the molding operation. The uncured strips of elastomeric material, which may contain some fibrous reinforcement, are available for reprocessing such as a constituent of the elastomeric layers.

A plurality of circumferential grooves 28 are formed in the belt sleeve during the skiving operation. The spacings between grooves S is chosen to match the spacings M of the mold cavity. As illustrated in Figure 3, a skived belt sleeve is folded inwardly and positioned within a semi-cavity mold 30 so that unremoved portions of the outer layer mesh with the cavities 32. The mold has a plurality of coaxially spaced, annular semi-cavities 32 with conical V-sidewall portions 34 interconnecting a cylindrical bottom surface portion 36. A plurality of mold ribs 38 define the V-side portions and have substantially a trapezoidal cross section 40.

The skived sleeve is molded and cured by pressurizing the sleeve against the mold while simultaneously heating. A known means for applying pressure is by use of a bladder and a known means for heating is by placing the mold into an autoclave for an appropriate period of time.

During molding and curing, overspaced V-sidewall portions 42 are formed as well as a plurality of ganged belts which are circumferentially attached to one another by portions of the inner layer juxtaposed the grooves 28.

Referring to Figure 7, portions of the overspaced V-sidewalls 42 are removed such as by positioning the cured sleeve over a supporting drum 44 and rotating the sleeve while simultaneously plunging a contoured grinding wheel 46 into the cured sleeve. One preferential grinding step plunges the grinding wheel to a point past the tensile member juxtaposed a surface reinforcement 48 in the inner layer. The amount of elastomeric material removed from the sleeve is illustrated by comparing the portion of the sleeve in Figure 7 to the molded portion of the sleeve. Stopping the abrading operation at the reinforcement permits molding the belts closer together so that more belts may be molded from a given sleeve.

The cured and abraded belt sleeve is circumferentially severed at the grooves such as by rotating the sleeve with a drum 50 and plunging circular knives 52 into the sleeves at the grooves as illustrated by Figure 8. Severing may also be accomplished during the abrading operation such as by grinding. However, when this is done, the grinding wheel must take away even more of the cured belt slab. The result is a fewer number of belts being produced per cured slab. For this reason, severing with knives is economically preferred even though an additional processing step may be required.

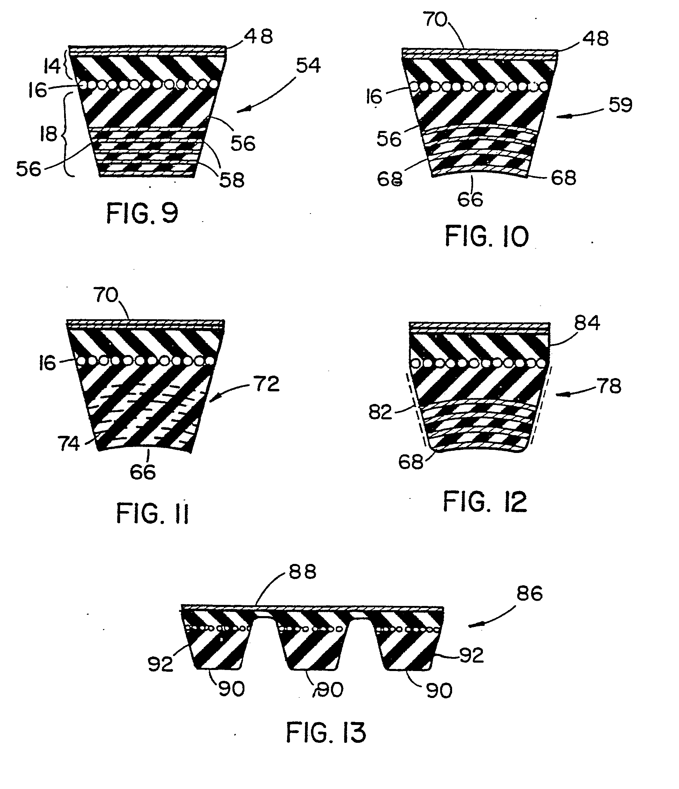

The thus severed belts may then be inverted as illustrated by the belt cross section 54 of Figure 9. The belt has raw edge V-sidewall portions 56 which define the belt frictional driving surfaces. A plurality of fabric layers 58 embedded in the elastomeric material are exposed at driving surfaces.

The process of the invention is adaptable for producing raw edge belts 59 having an arched reinforcement which heretofore have not been produced. The mold 60 of Figure 5 is used which has an annular convex portion 62 upraised from substantially the entire bottom surface portion in each semi-cavity. The ribs have substantially a chordal cross section 64. During molding, a circumferential concave depression 66 is formed in the exterior of the outer sleeve layer between the successive skived grooves. Molding simultaneously arches at least the fabric layers 68 juxtaposed the concave depression. The exterior surface of the inner layer is simultaneously molded to a substantially cylindrical shape 70. The inner layer forms the belt top surface when the belt is inverted to an upright position.

Similarly, the mold of Figure 5 may be used advantageously when using an elastomeric layer with discontinuous fiber reinforcement embedded therein as illustrated by the belt cross section 72 of Figure 11. The molding operation forms a circumferential concave depression 66 in the bottom of the belt, and arching of the fiber reinforcement 74 juxtaposed the bottom surface. As recognized in U.S. Patent 1,988,292 for covered belts, arching provides an improved structure. Arching also aids in the process by helping to keep cords of the tensile member in alignment.

If it were desired to remove even less cured material from the molded V-sides, the mold 76 as illustrated by Figure 6 may be used to produce a belt as represented by the cross section 78 shown in Figure 12. The spacing between the annular V-grooves of the mold are made closer together as illustrated by the sharp mold ribs 80. Cured material 82 is removed from the V-sides to about the point of the tensile member. The sleeve is then cut which forms a vertical sidewall or flat 84 on the belt sides. The closely spaced mold grooves and the vertical flat permit more belts to be cut from a given belt sleeve. This is because substantially all of the tensile member of the sleeve is used and not ground away as in the previous illustrations. However, such a technique is not recommended for belts having a top width below about 12 millimeters because they may have a tendency to turn over in a sheave groove during operation. Unstability is caused from the elimination of the V-side by the vertical flat.

Still another belt 86 which may be produced by the process of the invention is illustrated by the joined belt cross section of Figure 13. The belt is produced in a mold with semicavities similar to that of Figure 4 or 5 except that the cavities of the mold are further axially spaced from one another. Of course when this is done, a greater amount of skived material is removed. A grinding wheel formed for the greater spacing may be used to remove material from the molded V-sides. The finished belt has a plurality of joined 88 V-sections 90 with raw edges 92. Optionally the belts may have arched bottom surfaces as shown in Figures 10—12.

## Claims

1. A process for making V-belts comprising the steps of fabricating an inverted belt sleeve (10) from generally uncured elastomeric material with a tensile member (16) interpositioned between an inner first layer (14) and an outer second layer (18), curing the elastomeric material (Figure 3), removing cured elastomeric material and forming raw edge V-sidewall portions of V-belts, (Figure 7) and circumferentially cutting the cured belt sleeve thus forming V-belts (Figure 8) characterised in that circumferential strips (20, 22) of uncured elastomeric material are skived from the second layer (18) at axial spacings S of the sleeve 10, thus forming a plurality of circumferential grooves (28) in the sleeve (10), whereupon the skived but uncured belt sleeve is located in a mold (30) and is subjected to heat and pressure to mold and cure the skived belt sleeve while partially forming inverted V-belts with molded, overspaced V-sidewall portions (42) whereby the belts are circumferentially attached to one another by portions of the first layer (14) adjacent the grooves; and subsequently removing part of the now cured molded V-sidewall portions (42) so as to produce raw edge V-sidewalls (Figure 7); and then circumferentially severing the cured raw edge belt sleeve in the vicinity of at least some of the circumferential grooves thereby forming a plurality of finished V-belts (54, 59, 72, 78, 86) having raw edge V-sidewalls.

2. The process as claimed in Claim 1 characterised in that severing is achieved by grinding through the first layer (14) at the circumferential grooves (28).

3. The process as claimed in claim 1 characterised in that severing is achieved by cutting (Figure 8) through the first layer (14) at the circumferential grooves (28).

4. The process as claimed in claim 1, 2 or 3 characterised by the further steps of:

placing a plurality of laminate fabric layers (58) in the second layer (18) of the belt sleeve during the step of fabricating;

removing portions of the fabric layers (58) with the strips of elastomeric material during the step of skiving; and

molding the exterior surface of the inner first layer (14) to substantially a cylindrical shape and moulding a circumferential concave depression (66) in the exterior of the second layer (18) between successive grooves (28) and thereby simultaneously arching at least the fabric layers (58) juxtaposed the concave depression (Figures 10 and 12).

5. The process as claimed in claim 1, 2 or 3 characterised by the further steps of:

fabricating at least portions of the second layer (18) of the belt sleeve (10) with a fiber-loaded elastomeric material (74); and

molding the exterior surface of the first layer (14) to substantially a cylindrical shape and molding a circumferential concave depression (66) in the exterior of the second layer (18) between successive grooves (28) and thereby orienting at least some of the fibers (74) in an arch juxtaposed the concave depression (66) (see Figure 11).

6. The process as claimed in any one of claims 1 to 5 characterised in that it further includes reprocessing the uncured elastomeric strips (20 or 22) and using at least portions thereof in fabricating the uncured elastomeric layers (14, 18).

7. The process as claimed in any one of claims 1 to 6 characterised in that it further includes the step of forming strips (20) having triangular cross sections during the step of skiving.

8. The process as claimed in any one of claims 1 to 6 characterised in that it further includes the step of forming strips (22) having trapezoidal cross sections during the step of skiving.

9. The process as claimed in any one of claims 1 to 8 characterised in that the step of removing comprises abrading the portions (42) of the molded V-sidewalls.

**Patentansprüche**

1. Verfahren zur Herstellung von Keilriemen, welches die Schritte umfaßt, daß eine umgestülpte Riemenhülse (10) aus im wesentlichen unvulkanisiertem (bzw. unvernetztem bzw. unausgehärtetem) Elastomermaterial mit einem zwischen einer inneren, ersten Schicht (14) und einer äußeren, zweiten Schicht (18) gelegenen Zugglied (16) hergestellt wird, das Elastomermaterial vulkanisiert (bzw. vernetzt bzw. ausgehärtet) wird (Fig. 3), vulkanisiertes (u.ä.) Elastomermaterial entfernt wird und flankenoffene Keilflächenteile des Keilriemens gebildet werden (Fig. 7) und die vulkanisierte (u.ä.) Riemenhülse zur Bildung von Keilriemen am Umfang geschnitten wird (Fig. 8), dadurch gekennzeichnet, daß Umfangsstreifen (20, 22) von unvulkanisiertem (u.ä.) Elastomermaterial von der zweiten Schicht (18) in axialen Abständen (S) der Hülse (10) zur Bildung einer Mehrzahl von Umfangsnuten (28) in der Hülse (10) abgeschält werden, worauf die so bearbeitete aber unvulkanisierte (u.ä.) Riemenhülse in eine Form (30) eingesetzt und Hitze und Druck zur Formung und Vulkanisierung (u.ä.) der Hülse ausgesetzt wird, wodurch in umgekehrter Lage befindliche Keilriemen mit geformten, überdimensionierten Keilflächenteilen (42) teilweise geformt werden, wobei die Keilriemen miteinander durch den Nuten benachbarte Teile der ersten Schicht (14) am Umfang miteinander verbunden sind; und daß anschließend ein Teil der nun vulkanisierten (u.ä.), geformten Keilflächenteile (42) zur Bildung flankenoffener Keilflächen entfernt werden (Fig. 7); und daß dann die vulkanisierte (u.ä.), die offenen Flanken enthaltende Riemenhülse in der Nachbarschaft wenigstens einiger der Umfangsnuten zur Bildung einer Mehrzahl fertiger Keilriemen (54, 59, 72, 78, 86), die flankenoffene Keilflächen aufweisen, in Umfangsrichtung aufgetrennt wird.

2. Verfahren nach Anspruch 1, dadurch gekennzeichnet, daß die Auftrennung dadurch erreicht wird, daß durch die erste Schicht (14) bei den Umfangsnuten (28) hindurch geschliffen wird.

3. Verfahren nach Anspruch 1, dadurch gekennzeichnet, daß die Auftrennung dadurch erreicht wird, daß die erste Schicht (14) bei den Umfangsnuten (28) geschnitten wird (Fig. 8).

4. Verfahren nach Anspruch 1, 2 oder 3, gekennzeichnet durch die weiteren Schritte, daß

— eine Mehrzahl von Gewebeschichten (58) in der zweiten Schicht (18) der Riemenhülse während deren Herstellung schichtweise angeordnet wird;

— das Teile der Gewebeschichten (58) mit den Streifen von Elastomermaterial während des Abschälens entfernt werden;

— und die Außenfläche der inneren, ersten Schicht (14) im wesentlichen zylindrisch geformt wird und eine in Umfangsrichtung verlaufende, konkave Einsenkung (66) in die Außenfläche der zweiten Schicht (18) zwischen aufeinander folgenden Nuten (28) in solcher Weise eingeformt wird, daß gleichzeitig wenigstens die der konkaven Einsenkung nahe befindlichen gewebeschichten (58) gebogen werden (Fig. 10 und 12).

5. Verfahren nach Anspruch 1, 2 oder 3, gekennzeichnet durch die weiteren Schritte, daß

— wenigstens Teile der zweiten Schicht (18) der Riemenhülse (10) mit faserhaltigem Elastomermaterial (74) hergestellt werden; und

— die Außenfläche der ersten Schicht (14) im wesentlichen zylindrisch geformt und eine in Umfangsrichtung verlaufende, konkave Einsenkung (66) in das Äußere der zweiten Schicht (18) zwischen aufeinanderfolgenden Nuten (28) in solcher Weise eingeformt wird, daß wenigstens einige der Fasern (74) in der Art eines der konkaven Einsenkung (66) nahe gelegenen Bogens orientiert werden (siehe Fig. 11).

6. Verfahren nach einem der Ansprüche 1 bis 5, dadurch gekennzeichnet, daß die unvulkanisierten (u.ä.) Elastomerstreifen (20 oder 22) wieder verwendet und wenigstens Teile derselben bei der Herstellung der unvulkanisierten (u.ä.) Elastomerschichten (14, 18) verwendet werden.

7. Verfahren nach einem der Ansprüche 1 bis 6, dadurch gekennzeichnet, daß in dem Vorgang des Abschälens Streifen (20) mit dreiecksförmiger Querschnittsgestalt gebildet werden.

8. Verfahren nach einem der Ansprüche 1 bis 6, dadurch gekennzeichnet, daß in dem Vorgang des Abschälens Streifen (22) mit trapezförmiger Querschnittsgestalt gebildet werden.

9. Verfahren nach einem der Ansprüche 1 bis 8, dadurch gekennzeichnet, daß der Vorgang des Entfernens das Abschleifen der die geformten Keilflächen bildenden Teile (42) umfaßt.

**Revendications**

1. Procédé de fabrication de courroies trapézoïdales comportant les opérations de fabrication d'une gaine de courroie inversée (10) à partir de matériau élastomère dans son ensemble et non vulcanisé avec interposition d'un élément de traction (16) entre une première couche intérieure (14) et une seconde couche extérieure (18), de vulcanisation du matériau élastomère (figure 3), d'élimination de matériau élastomère vulcanisé et de façonnage de parties de paroi latérale à bord brut et convergentes de courroies trapézoïdales (figure 7), et de découpage circonférentiel de la gaine de courroie vulcanisée, ce qui forme des courroies trapézoïdales (figure 8) caractérisé en ce qu'on enlève des bandes circonférentielles (20, 22) de matériau élastomère non vulcanisé de la seconde couche (18) à des espacements axiaux S de la gaine (10), formant ainsi une pluralité de rainures circonférentielles (28) dans la gaine (10), après quoi on place la gaine de courroie rainurée mais non vulcanisée dans un moule (30) et on la soumet à la chaleur et la pression pour mouler et vulcaniser la gaine de courroies rainurée tout en formant partiellement des courroies trapézoïdales inversées à parties de paroi latérale convergentes sur-espacées (42), ces courroies étant circonférentiellement attachées l'une à l'autre par des parties de la première couche (14) adjacentes aux rainures; et l'on élimine ensuite partiellement les parties de paroi latérale convergentes alors vulcanisées et moulées (42) de manière à produire des parois latérales convergentes et à bord brut (figure 7); puis on sectionne circonférentiellement la gaine de courroies à bords bruts vulcanisée au voisinage de certaines au moins des rainures circonférentielles, formant ainsi une pluralité de courroies trapézoïdales finies (54, 59, 72, 78, 86) ayant des parois latérales convergentes à bord brut.

2. Procédé selon la revendication 1, caractérisé en ce qu'on opère le sectionnement par meulage à travers la première couche (14) au niveau de rainures circonférentielles (28).

3. Procédé selon la revendication 1, caractérisé en ce qu'on opère le sectionnement par coupe (figure 8) à travers la première couche (14) au niveau des rainures circonférentielles (28).

4. Procédé selon la revendication 1, 2 ou 3, caractérisé par les opérations supplémentaires de:

mise en place d'une pluralité de couches de toiles stratifiées (58) dans la seconde couche (18) de la gaine de courroies durant l'opération de fabrication;

élimination de parties des couches de toiles (58) avec les bandes d'élastomère durant le stade d'enlèvement; et

mise par moulage de la surface extérieure de la première couche intérieure (14) sous forme sensiblement cylindrique et moulage d'une dépression concave circonférentielle (66) dans l'extérieur de la seconde couche (18) entre rainures (28) successives et par là cintrage simultané d'au moins les couches de toiles (58) qui sont juxtaposées à la dépression concave (figures 10 et 12).

5. Procédé selon les revendications 1, 2 ou 3, caractérisé par les opérations supplémentaires de:

fabrication de parties au moins de la seconde couche (18) de la gaine de courroies (10) avec un matériau élastomère chargé de fibres (74); et

mise par moulage de la surface extérieure de la première couche (14) sous forme sensiblement cylindrique et moulage d'une dépression concave circonférentielle (66) dans l'extérieur de la seconde couche (18) entre rainures (28) successives et par là orientation de certaines au moins des fibres (74) pour leur donner une forme d'axe juxtaposé à la dépression concave (66) (voir figure 11).

6. Procédé selon l'une quelconque des revendications 1 à 5, caractérisé en ce qu'il comporte encore le recyclage des bandes élastomères non vulcanisées (20 ou 22) et l'utilisation de partie au moins de celles-ci à la fabrication des couches élastomères non vulcanisées (14, 18).

7. Procédé selon l'une quelconque des revendications 1 à 6, caractérisé en ce qu'il comporte encore l'opération de formation de bandes (20) à section triangulaire durant l'opération d'enlèvement.

8. Procédé selon l'une quelconque des revendications 1 à 6, caractérisé en ce qu'il comporte encore l'opération de formation de bandes (22) à section trapézoïdale durant l'opération d'enlèvement.

9. Procédé selon l'une quelconque des revendications 1 à 8, caractérisé en ce que l'opération d'élimination comporte le meulage des parties (42) des parois latérales convergentes moulées.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13